# EUROPEAN PATENT SPECIFICATION

(11) **EP 2 155 535 B1**
(45) Date of publication and mention of the grant of the patent: **16.03.2011**
(21) Application number: 08763227.9
(22) Date of filing: 06.06.2008
(51) Int. Cl.: B62D 23/00, B62D 29/00, B62D 27/02, B62D 29/04, B62D 65/02

(54) **PROCESS FOR CONSTRUCTING THE LOADBEARING STRUCTURE OF A MOTOR VEHICLE BODY, AND LOADBEARING STRUCTURE SO CONSTRUCTED**
VERFAHREN ZUR KONSTRUKTION DER LASTTRAGENDEN STRUKTUR EINER FAHRZEUGKAROSSERIE UND AUF DIESE WEISE KONSTRUIERTE LASTTRAGENDE STRUKTUR
PROCÉDÉ POUR CONSTRUIRE LA STRUCTURE DE SUPPORT DE CHARGE D'UNE CARROSSERIE DE VÉHICULE À MOTEUR ET STRUCTURE DE SUPPORT DE CHARGE AINSI CONSTRUITE

(30) Priority: 08.06.2007 IT TO20070404
(43) Date of publication of application: 24.02.2010
(73) Proprietor: INNOVATION IN AUTO INDUSTRY S.r.l., 10100 Torino (IT)
(72) Inventor: MALVINO, Giuliano, I-12062 Cherasco (Cuneo) (IT)
(74) Representative: Notaro, Giancarlo
(86) International application number: PCT/IB2008/052230
(87) International publication number: WO 2008/149317

(56) References cited:
- WO-A-02/04276
- WO-A-2005/061311
- WO-A-2006/031761
- US-A- 6 010 182
- US-B1- 6 389 697

## Description

This invention relates to a process for constructing the loadbearing structure of a motor vehicle body, and loadbearing structure so constructed.

More specifically the invention relates to a process for producing a loadbearing structure, comprising the assembly of a frame including a plurality of extruded profiled members of, for example, light metal alloy, of essentially box cross-section, connected together directly or through joining members.

Processes and loadbearing structures of this type are known for example from European patent EP 0 146 716 B1 and international patent application WO-96/27518.

The known arrangements described in these prior documents provide for the use of a large number of types of different extruded profiles whose manufacture requires the provision of a corresponding plurality of extrusion equipment. In addition to this, the mutual interconnection of such a large number of types of extruded profiles also requires the provision and use of a large number of different joining members. All this makes the implementation of such procedures rather complicated and costly, in general more like custom assembly than a proper industrial process.

One object of this invention is to provide a loadbearing structure for a motor vehicle body, and a process for constructing it, which make it possible to overcome the abovementioned disadvantages of the arrangements according to the known art.

This and other objects are accomplished according to the invention through a loadbearing structure whose prominent characteristics are defined in appended claim 1, and through construction processes whose principal characteristics are defined in claim 10.

Other advantages and characteristics of the present invention will become clear from the following detailed description which is given with reference to the appended drawings which are provided purely by way of non-limiting example and in which:
Figure 1 is a perspective view of a loadbearing structure for a motor vehicle body according to the invention,
Figure 2 is a perspective view of a frame incorporated in the loadbearing structure in Figure 1,
Figures 3 and 4 are perspective views which show the only two types of extruded profiles used according to the invention,
Figure 5 is a partial exploded perspective view showing a connection or node, indicated by V in Figure 2, between extruded profiles connected together by means of a joining member,
Figure 6 is a perspective view showing a direct connection between extruded profiles, as at the node indicated by VI in Figure 2,
Figure 7 is a cross-sectional view along the line VII-VII in Figure 2,
Figure 8 is an almost-frontal perspective view of the joint between the profiles indicated by VIII in Figure 2, and
Figure 9 shows two joints between extruded profiles constructed in the forward part of the loadbearing structure and indicated by IX in Figure 2.

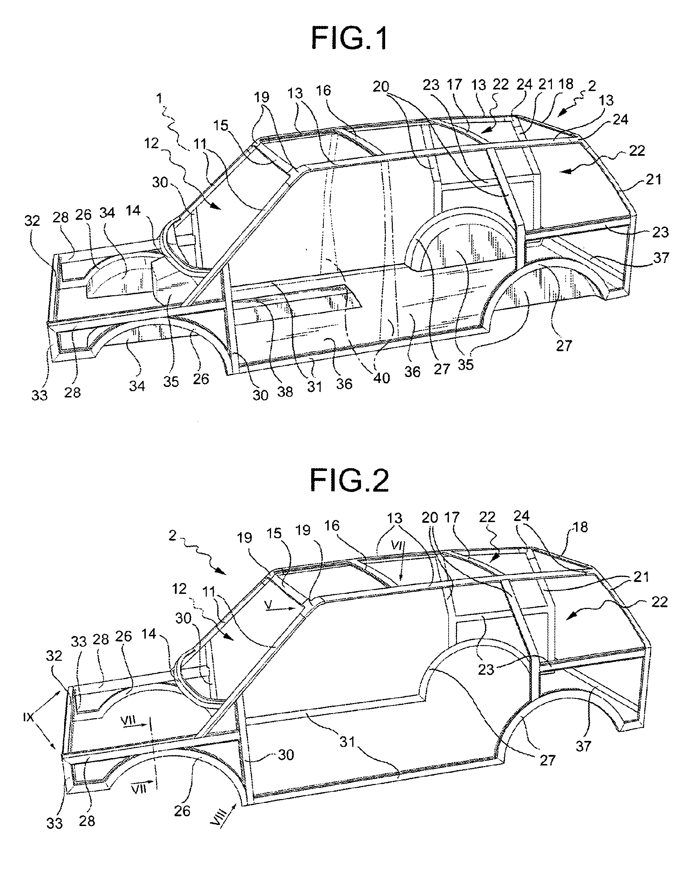

In Figure 1, reference 1 indicates as a whole a loadbearing structure of a motor vehicle body constructed according to this invention.

Loadbearing structure 1 comprises a frame 2, shown alone in Figure 2, constructed of extruded profiled members, preferably of light metal alloy, of essentially box cross-section.

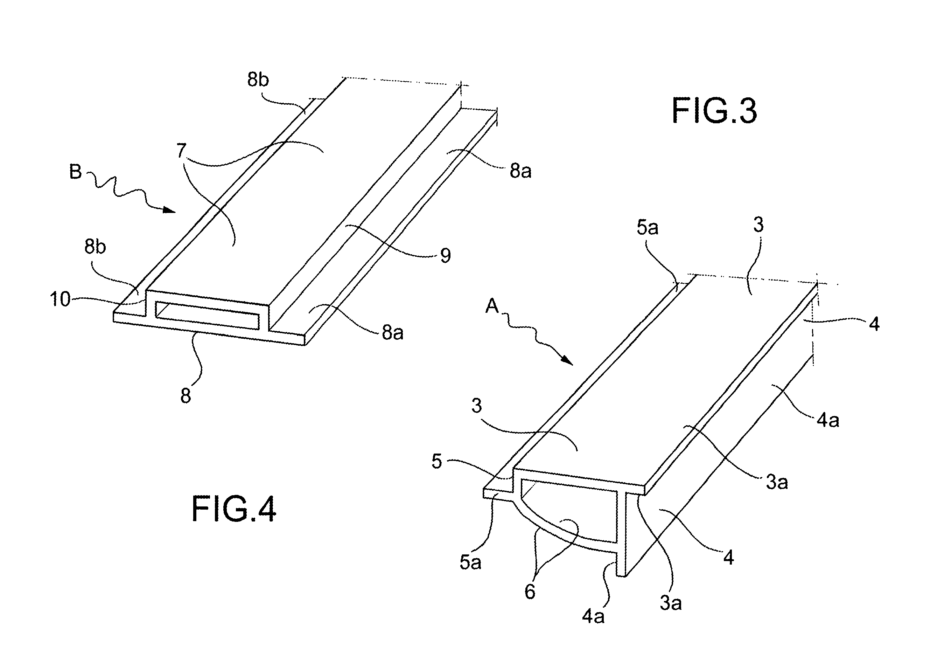

According to this invention frame 2 is assembled using only a first and a second type of extruded profiles, indicated in general by the letters A and B respectively (see in particular Figures 3 and 4).

With reference to Figure 3, an extruded profile of the first type, or Type A, has an upper wall 3, an outer side wall 4, an inner side wall 5 and a bottom wall 6. In the example illustrated it is curved and externally convex.

Upper wall 3 of a profile of type A forms a lateral fin 3a projecting beyond outer lateral wall 4, which in turn forms a lower fin 4a which projects downwards beyond bottom wall 6.

In Figure 3 reference 5a indicates an inner lateral fin of a type A profile, the fin extending from the joint between inner wall 5 and bottom wall 6 in a plane which is essentially below that of upper wall 3. Fin 5a may also extend from the intermediate part of side wall 5, or bottom wall 6.

With reference to Figure 4, an extruded profile of the second type, or type B, has an essentially rectangular cross-section, with two larger walls 7 and 8, and two smaller walls 9 and 10. Larger wall 8 extends laterally forming two longitudinal fins 8a and 8b projecting on opposite sides.

In this description, and in the claims which follow, by profiles of the first type or type A are meant profiles having the general shape described above with reference to Figure 3, which are or can be produced using the same extrusion equipment, but which may differ from each other in some geometrical parameter which can be modified in the course of extrusion, such as the curvature of the profile and the dimensions (width, thickness) of the various parts of the profile, such as the fins described above. Similar considerations apply to profiles of the second type or type B.

Given the above, and with reference now to Figures 1 and 2, frame 2 of the body illustrated by way of example comprises a plurality of extruded profiles of the first type or type A, which will now be described.

Lateral uprights 11 of windscreen opening 12, and the longitudinal lateral members 13 of the roof of the motor vehicle are constructed using extruded profiles of type A.

All the other extruded profiles forming frame 2 are instead of the second type or type B.

Lower cross-member 14 and upper cross-member 15 of windscreen opening 12, and intermediate cross-members 16, 17 and rear cross-member 18 of the roof are profiles of the second type.

In the embodiment illustrated in Figures 1 and 2, the connections between lateral uprights 11 and upper cross-member 15 of windscreen opening 12, and the forward extremities of longitudinal members 13 of the roof, are constructed using two joining members 19, which are symmetrical mirror images of each other.

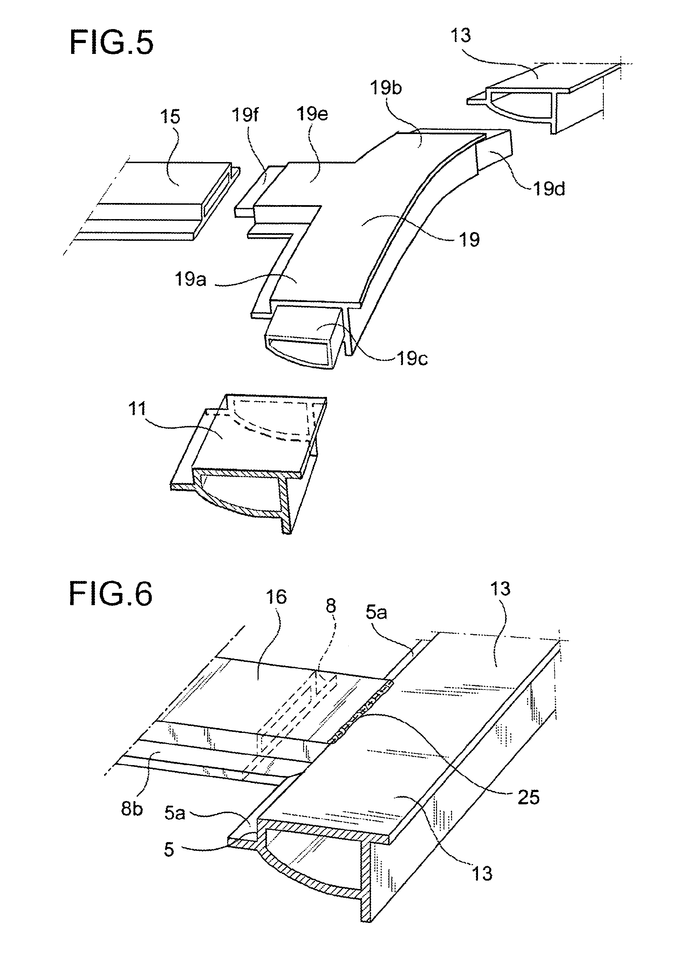

One of these connections is illustrated in Figure 5, in which the shape of a joining member 19 can be more clearly seen. This joining member has two limbs 19a and 19b, in longitudinal alignment with each other, of cross-section corresponding to the transverse shape of profiles 11 and 13 connected thereto.

As will be seen in Figure 5, limbs 19a and 19b have corresponding projections 19c and 19d which can be inserted into the corresponding longitudinal cavities of associated profiles 11 and 13 forming a mating connection. Once inserted, the connection can be stabilised, for example by welding or adhesive bonding, or by other known techniques.

Joining member 19 has a transverse limb 19e whose cross-section has essentially the same transverse shape as profile 15, of type B, to which it is functionally connected. This limb 19e of junction member 19 has a projection 19f which can be inserted into the corresponding axial cavity of cross-member 15 in a mating manner. The connection between limb 19e and cross-member 15 can also be stabilised by for example welding, adhesive bonding or other techniques in themselves known.

Further elements of frame 2 constructed using profiles of type B form the lateral uprights 20 or 21 of rear side windows 22, and the lower cross-member 23 of this opening.

Rear cross-member 18 of the roof, the rear extremities of longitudinal members 13 thereof and the upper extremities of uprights 21 are connected together by means of a further pair of joining members 24. These joining members are similar to members 19 already described, and differ from them in the fact that they have two limbs having a transverse shape of that of type B profiles, and a single limb having a transverse shape corresponding to that of type A profiles.

Joining members 24 are also conveniently connected to profiles 13, 18 and 21 by means of male/female type insertions, preferably stabilised by for example welding, adhesive bonding or other techniques in themselves known.

Figure 6 shows a direct connection between a profile of type A (longitudinal member 13 of the roof) and a profile of type B (cross-member 16 of the roof). In this case the connection is made after part of fin 5a of the type A profile (13) has been cut and /or fins 8a and 8b of the type B profile (16) have been partly cut in such a way that the box portion of the type B profile (16) can be abutted against the inner wall 5 of the type A profile (13).

There are a wide variety of ways in which fin 5a and/or fins 8a and 8b can be inserted, and these are within the scope of those skilled in the art.

The butt joint between the type A profile and a type B profile can then be stabilised by for example welding, as illustrated in Figure 6, in which this weld is indicated by 25.

With reference again to Figures 1 and 2, curved members 26 and 27 corresponding to the fore and rear wheel arches respectively are also constructed using type B profiles. The transverse cross-section of these members is substantially the same general cross-section of type B profiles. The curvature of these members 26 and 27 is brought about in a manner which is itself known in the course of extrusion, or subsequently, by cold or hot working.

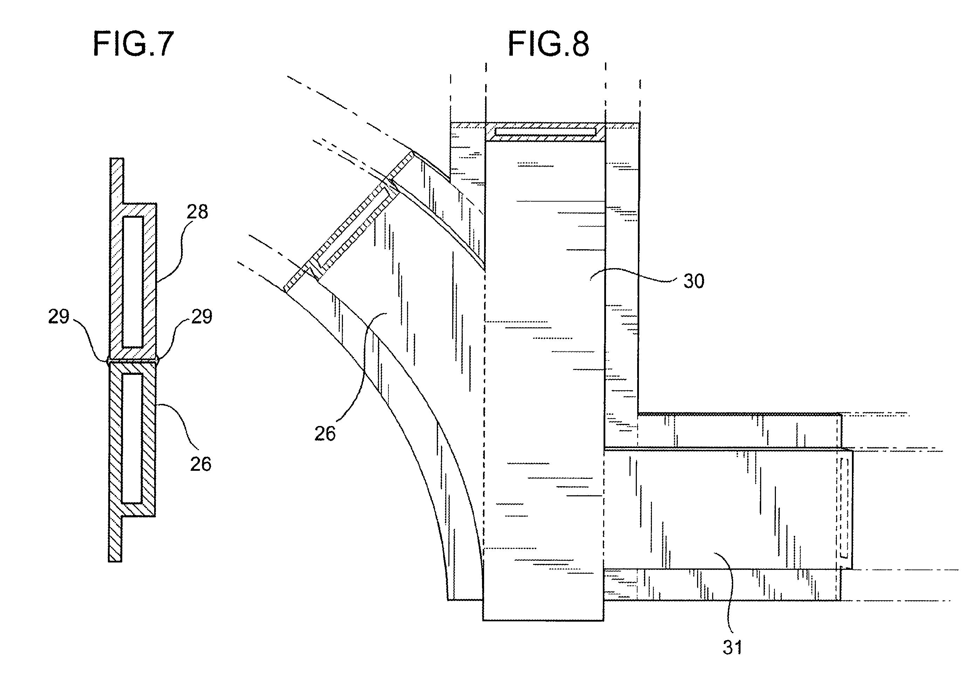

Curved profiled members 26 in the embodiment illustrated by way of example are tangential to front longitudinal members 28 adjacent to them, which extend essentially horizontally. Conveniently, in the area in which they touch, the box parts of these profiles 26 and 28 are brought into contact and then stabilised, for example by means of welding, after portions of their adjacent fins have been correspondingly cut off, as shown in Figure 7. The weld between these profiles is indicated by 29.

Figure 8 shows the connection between the rear extremity of a curved profile 26, an adjacent vertical upright 3, and a lower longitudinal member 31 of frame 2 in an almost frontal perspective view. This joint is also made after parts of the fins of the three profiles used, all of which belong to the type previously defined as type B, have been previously cut.

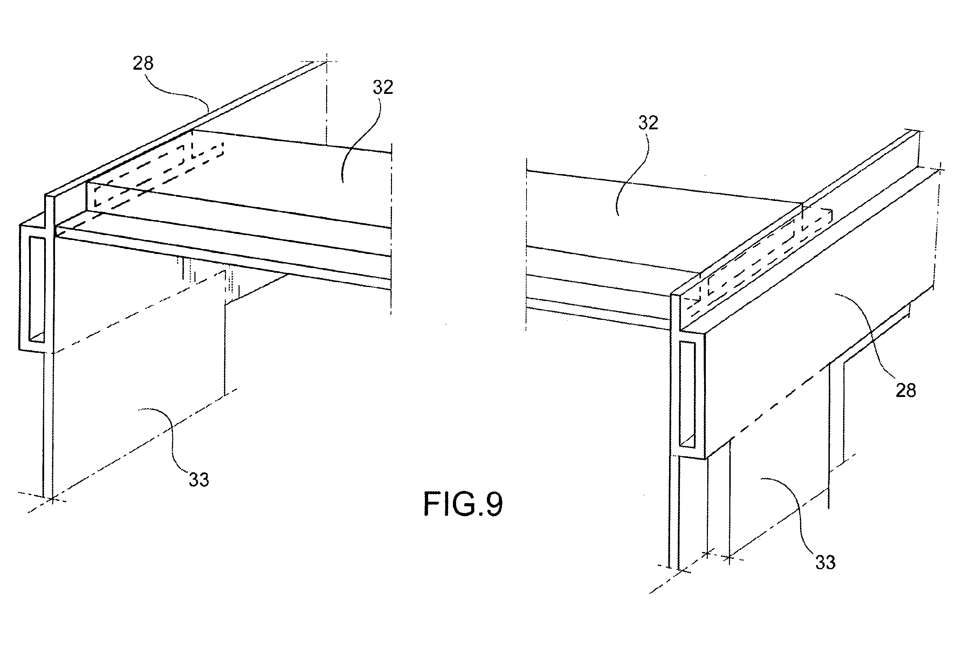

Figure 9 shows one example of how connection between type B profiles can be made, in particular at the points indicated by IX in Figure 2, in the frontal part of frame 2 of the body. In particular, the connection between the forward extremities of longitudinal members 28, a forward cross-member 32 and two small essentially vertical uprights 33 is shown. Other forms of connection are however possible.

As already mentioned previously, apart from uprights 11 of windscreen opening 12 and longitudinal roof members 13, all the other profiles in frame 2 are made using type B profiles. This also applies to the other profiled members in the frame which are not specifically mentioned in the above description, and not specifically numbered in Figures 1 and 2.

Loadbearing structure 1 is obtained by connecting a plurality of elements, such as panels and shells, made by the cutting, pressing and drawing of sheet members, in particular light metal alloy sheets, to frame 2.

Thus, for example, curved profiles 26 and 27 are associated with corresponding wheel arch shells indicated by 34 and 35 in Figure 1.

Between uprights 30, a shaped panel 35, which can also act as a flame-stop wall, is attached to lower cross-member 14 of windscreen opening 12.

Finally a floor or platform 36, connected to rear wheel arch shell 35 and a rear cross-member 37 of the frame (a cross-member which is also incidentally made using an extruded profile of type B) is located between longitudinal members 31 beneath the doors.

A tunnel-shaped member 38 may be incorporated into or attached to floor or platform 36.

Loadbearing structure 1 may be supplemented with a pair of central columns or uprights 40, made for example using a pressed sheet of light metal alloy.

With reference again to Figures 1 to 3, fins 3a of profiles 11 and 13 of type A are used for attachment of the roof panels.

Lower fin 4a of uprights 11 and longitudinal members 13, and the fin of upright 20 facing the front of the frame are used to attach the seals which provide a seal for the doors.

Lower fin 4a of longitudinal members 13 and the fins of profiles 20, 21 and 23 facing into opening 22 for the rear windows are used to form the supporting surface for the glass of these windows.

Inner fins 5a of uprights 11 and the fins mutually facing cross-members 14 and 15 are used as a whole to form a supporting surface for the windscreen glass.

For these purposes walls 5 of type A profiles and side walls 9 of type B profiles (Figures 3 and 4) are conveniently and preferably of the same external height.

Many variants of the implementation described above are possible.

Thus, for example, although the use of extruded profiled members of light metal alloy is the currently preferred option, the invention can be similarly implemented using extruded profiled steel members, or plastics sections, which may be reinforced.

Another variant relates to the joints illustrated in Figure 9, in which cross-member 32 can be connected to profiled members 28 and 33 in a way in which it can be dismantled, so as to allow easier access to and possible removal of any mechanical units in the vehicle's forward space or bonnet.

Finally, the invention is not restricted to the construction of loadbearing structures for motor vehicle bodies of the station wagon type, as illustrated in Figure 2, but is suitable for the construction of loadbearing structures of a great variety of shapes, such as bodies of the saloon, coupé, pick-up, etc., type.

Naturally, the principle of the invention remaining the same, the forms of embodiment and details of construction may be varied widely with respect to those described and illustrated, which have been given purely by way of non limiting example, without thereby departing from the scope of the invention as defined in the appended claims.

## Claims

1. A loadbearing structure (1) for a motor vehicle body, comprising a frame (2) including a plurality of extruded profiled members (11-33, 37), of essentially box cross-section, connected together directly or by means of joining members (19, 24),
**characterised in that** the frame (2) comprises only
a first type (A) of extruded profiles, having an upper wall (3), an outer side wall (4), an inner side wall (5) and a bottom wall (6), and in which the upper wall (3) forms a lateral fin (3a) projecting beyond the outer side wall (4), which in turn forms a lower fin (4a) projecting downwards beyond the bottom wall (6); an inner lateral fin (5a) extending from the inner wall (5) and/or bottom wall (6), in a plane which is essentially below that of the upper wall (3), and
a second group (B) of extruded profiles of essentially rectangular cross-section, one of whose walls (8) is extended forming two longitudinal fins (8a, 8b) projecting on opposite sides,
the first type (A) of extruded profile being used to form the lateral uprights (11) of the windscreen opening (12), and the longitudinal lateral members (13) of the motor vehicle roof, and
the second type (B) of extruded profiles being used to form all the rest of the frame (2).

2. A loadbearing structure according to claim 1, in which in the frame (2) two profiles of one type (A; B) are connected to a profile of the other type (B; A) through a joining member (19, 24) having two limbs (19a, 19b) of cross-section substantially identical to that of the said two profiles, and a third limb (19e) having a cross-section which is substantially identical to that of the profile of the said other type (B; A).

3. A loadbearing structure according to claim 2, in which the limbs of the junction member (19; 24) are connected to corresponding extremities of the said profiled members (A; B) by mating connections, in particular of the male-female type, stabilised by permanent connection means.

4. A loadbearing structure according to any one of the preceding claims, in which two or more profiled members of the second type (B) are connected together by placing their corresponding box portions together after previous partial removal of at least one fin from at least one of them.

5. A loadbearing structure according to any one of the preceding claims, in which the height of the inner wall (5) of a profile of the first type (A) is substantially the same as the height of a corresponding side wall (9) of a profile of the other type (B).

6. A loadbearing structure according to any one of the preceding claims, in which shaped members, such as at least a floor panel or platform (36) and front (34) and rear (35) wheel arch shells are attached to the frame (2).

7. A loadbearing structure according to any one of the preceding claims, in which the said extruded profiled members are of metal alloy, in particular a light metal alloy.

8. A loadbearing structure according to any one of claims 1 to 6, in which the said extruded profiled members are made of a plastics material.

9. A loadbearing structure according to any one of the preceding claims, in which the said joining members (19, 24) are made of pressed metal material.

10. A process for the construction of a loadbearing structure (1) of a motor vehicle body, comprising the assembly of a frame (2) including a plurality of extruded profiled members (11-33; 37) having an essentially box cross-section, connected together directly or by means of joining members (19, 24); the process being **characterised in that** the frame (2) is assembled using only
a first type (A) of extruded profiles, having an upper wall (3), an outer side wall (4), an inner side wall (5) and a bottom wall (6), and in which the upper wall (3) forms a lateral fin (3a) projecting beyond the outer side wall (4), which in turn forms a lower fin (4a) projecting downwards beyond the bottom wall (6); an inner lateral fin (5a) extending from the inner wall (5) and/or the bottom wall (6), in a plane which is essentially below that of the upper wall (3), and
a second group (B) of extruded profiles of essentially rectangular cross-section, one of whose walls (8) is extended forming two longitudinal fins (8a, 8b) projecting from opposite sides,
the first type (A) of extruded profiles being used to form the lateral uprights (11) of the windscreen opening (12), and the longitudinal lateral members (13) of the motor vehicle roof,
the second type (B) of extruded profiles being used to form all the rest of the frame (2).

## Patentansprüche

1. Lasttragende Struktur (1) für eine Kraftfahrzeugkarosserie, die einen Rahmen (2), der eine Vielzahl extrudierter Profilelemente (11-33, 37) mit im Wesentlichen kastenförmigem Querschnitt enthält, die direkt oder über verbindende Elemente (19, 24) miteinander verbunden sind,
**dadurch gekennzeichnet, dass** der Rahmen (2) nur umfasst:
einen ersten Typ (A) extrudierter Profile, die eine obere Wand (3), eine äußere Seitenwand (4), eine innere Seitenwand (5) und eine untere Wand (6) aufweisen, wobei die obere Wand (3) eine seitliche Rippe (3a) aufweist, die über die äußere Seitenwand (4) hinaus vorsteht, die ihrerseits eine untere Rippe (4a) aufweist, die über die untere Wand (6) hinaus nach unten vorsteht, wobei sich eine innere seitliche Rippe (5a) von der inneren Wand (5) und/oder der unteren Wand (6) in einer Ebene erstreckt, die im Wesentlichen unterhalb der der oberen Wand (3) liegt, und
eine zweite Gruppe (B) extrudierter Profile mit im Wesentlichen rechteckigen Querschnitt, wobei sich eine ihrer Wände (8) so erstreckt, dass sie zwei Längsrippen (8a, 8b) aufweist, die an einander gegenüberliegenden Seiten vorstehen,
wobei der erste Typ (A) extrudierter Profile verwendet wird, um die seitlichen Stützen (11) der Windschutzscheibenöffnung (12) und die in Längsrichtung verlaufenden seitlichen Elemente (13) des Kraftfahrzeugdachs zu bilden, und
der zweite Typ (B) extrudierter Profile eingesetzt wird, um den Rest des Rahmens (2) auszubilden.

2. Lasttragende Struktur nach Anspruch 1, wobei in dem Rahmen (2) zwei Profile eines Typs (A; B) mit einem Profil des anderen Typs (B; A) über ein verbindendes Element (19, 24) verbunden sind, das zwei Schenkel (19a, 19b) mit einem Querschnitt, der im Wesentlichen identisch mit dem der zwei Profile ist, sowie einen dritten Schenkel (19e) aufweist, der einen Querschnitt hat, der im Wesentlichen identisch mit dem des Profils des anderen Typs (B; A) ist.

3. Lasttragende Struktur nach Anspruch 2, wobei die Schenkel des verbindenden Elementes (19; 24) mit entsprechenden äußeren Enden der Profilelemente (A; B) durch Eingriffsverbindungen, insbesondere vom Vorsprung-Loch-Typ, verbunden sind, die durch feste Verbindungseinrichtungen stabilisiert werden.

4. Lasttragende Struktur nach einem der vorangehenden Ansprüche, wobei zwei oder mehr Profilelemente des zweiten Typs (B) miteinander verbunden werden, indem ihre entsprechenden Kastenabschnitte nach vorheriger teilweiser Entfernung wenigstens einer Rippe von wenigstens einem von ihnen zusammengesetzt werden.

5. Lasttragende Struktur nach einem der vorangehenden Ansprüche, wobei die Höhe der inneren Wand (5) eines Profils des ersten Typs (A) im Wesentlichen die gleiche ist wie die Höhe einer entsprechenden Seitenwand (9) eines Profils des anderen Typs (B).

6. Lasttragende Struktur nach einem der vorangehenden Ansprüche, wobei die geformten Elemente, wie beispielsweise wenigstens eine Bodenplatte oder Plattform (36) und vordere (34) sowie hintere (35) Radlaufschalen, an dem Rahmen (2) angebracht sind.

7. Lasttragende Struktur nach einem der vorangehenden Ansprüche, wobei die extrudierten Profilelemente aus Metalllegierung, insbesondere einer Leichtmetalllegierung, bestehen.

8. Lasttragende Struktur nach einem der Ansprüche 1 bis 6, wobei die extrudierten Profilelemente aus einem Kunststoffmaterial bestehen.

9. Lasttragende Struktur nach einem der vorangehenden Ansprüche, wobei die verbindenden Elemente (19, 24) aus gepresstem Metallmaterial bestehen.

10. Verfahren zur Herstellung einer lasttragende Struktur (1) einer Kraftfahrzeugkarosserie, das die Montage eines Rahmens (2) einschließt, der eine Vielzahl extrudierter Profilelemente (11-33; 37) mit im Wesentlichen kastenförmigem Querschnitt enthält, die direkt oder über verbindende Elemente (19, 24) miteinander verbunden sind, wobei der Prozess **dadurch gekennzeichnet ist, dass** der Rahmen (2) unter Verwendung lediglich der folgenden Elemente zusammengesetzt wird:
eines ersten Typs (A) extrudierter Profile, die eine obere Wand (3), eine äußere Seitenwand (4), eine innere Seitenwand (5) und eine untere Wand (6) aufweisen, wobei die obere Wand (3) eine seitliche Rippe (3a) aufweist, die über die äußere Seitenwand (4) hinaus vorsteht, die ihrerseits eine untere Rippe (4a) aufweist, die über die untere Wand (6) hinaus nach unten vorsteht, wobei sich eine innere seitliche Rippe (5a) von der inneren Wand (5) und/oder der unteren Wand (6) in einer Ebene erstreckt, die im Wesentlichen unterhalb der der oberen Wand (3) liegt, und
einer zweiten Gruppe (B) extrudierter Profile mit im Wesentlichen rechteckigem Querschnitt, wobei sich eine ihrer Wände (8) so erstreckt, dass sie zwei Längsrippen (8a, 8b) aufweist, die an einander gegenüberliegenden Seiten vorstehen,
wobei der erste Typ (A) extrudierter Profile verwendet wird, um die seitlichen Stützen (11) der Windschutzscheibenöffnung (12) und die in Längsrichtung verlaufenden seitlichen Elemente (13) des Kraftfahrzeugdachs zu bilden, und
der zweite Typ (B) extrudierter Profile eingesetzt wird, um den Rest des Rahmens (2) auszubilden.

## Revendications

1. Structure de support de charge (1) pour une caisse de véhicule à moteur, comprenant un châssis (2) comprenant une pluralité d'éléments profilés extrudés (11-33, 37), ayant une section transversale essentiellement en forme de boîte, raccordés ensemble directement ou au moyen d'éléments d'assemblage (19, 24),
**caractérisée en ce que** le châssis (2) comprend uniquement :
un premier type (A) de profils extrudés, ayant une paroi supérieure (3), une paroi latérale externe (4), une paroi latérale interne (5) et une paroi inférieure (6), et dans laquelle la paroi supérieure (3) forme une ailette latérale (3a) faisant saillie au-delà de la paroi latérale externe (4), qui forme à son tour une ailette inférieure (4a) faisant saillie vers le bas au-delà de la paroi inférieure (6) ; une ailette latérale interne (5a) s'étendant à partir de la paroi interne (5) et/ou la paroi inférieure (6), dans un plan qui est essentiellement au-dessous de celui de la paroi supérieure (3), et
un deuxième groupe (B) de profils extrudés ayant une section transversale essentiellement rectangulaire, dont l'une des parois (8) est étendue en formant deux ailettes longitudinales (8a, 8b) faisant saillie sur les côtés opposés,
le premier type (A) de profils extrudés étant utilisé pour former des montants latéraux (11) de l'ouverture de pare-brise (12) et les éléments latéraux longitudinaux (13) du toit du véhicule à moteur, et
le deuxième type (B) de profils extrudés étant utilisé pour former tout le reste du châssis (2).

2. Structure de support de charge selon la revendication 1, dans laquelle, dans le châssis (2), deux profils d'un type (A ; B) sont raccordés à un profil de l'autre type (B ; A) par le biais d'un élément d'assemblage (19, 24) ayant deux membres (19a, 19b) de section transversale sensiblement identique à celle desdits deux profils, et un troisième membre (19e) ayant une section transversale qui est sensiblement identique à celle du profil dudit autre type (B ; A).

3. Structure de support de charge selon la revendication 2, dans laquelle les membres de l'élément de jonction (19 ; 24) sont raccordés aux extrémités correspondantes desdits éléments profilés (A ; B) par des raccordements de couplage, en particulier de type mâle-femelle, stabilisés par des moyens de raccordement permanents.

4. Structure de support de charge selon l'une quelconque des revendications précédentes, dans laquelle deux éléments profilés ou plus du deuxième type (B) sont raccordés ensemble en plaçant leurs parties en forme de boîte correspondantes ensemble après le retrait partiel préalable d'au moins une ailette d'au moins l'une d'entre elles.

5. Structure de support de charge selon l'une quelconque des revendications précédentes, dans laquelle la hauteur de la paroi interne (5) d'un profil du premier type (A) est sensiblement la même que la hauteur d'une paroi latérale (9) correspondante d'un profil de l'autre type (B).

6. Structure de support de charge selon l'une quelconque des revendications précédentes, dans laquelle des éléments formés, tels qu'au moins un panneau de plancher ou une plate-forme (36) et des coques de passage de roue avant (34) et arrière (35) sont fixées au châssis (2).

7. Structure de support de charge selon l'une quelconque des revendications précédentes, dans laquelle lesdits éléments profilés extrudés sont réalisés à partir d'un alliage métallique, en particulier un alliage de métal léger.

8. Structure de support de charge selon l'une quelconque des revendications 1 à 6, dans laquelle lesdits éléments profilés extrudés sont réalisés à partir d'une matière plastique.

9. Structure de support de charge selon l'une quelconque des revendications précédentes, dans laquelle lesdits éléments d'assemblage (19, 24) sont réalisés à partir d'un matériau métallique comprimé.

10. Procédé pour la construction d'une structure de support de charge (1) d'une caisse de véhicule à moteur, comprenant l'assemblage d'un châssis (2) comprenant une pluralité d'éléments profilés extrudés (11-33 ; 37) ayant une section transversale essentiellement en forme de boîte, raccordés ensemble directement ou au moyen d'éléments d'assemblage (19, 24) ; le procédé étant **caractérisé en ce que** le châssis (2) est assemblé en utilisant uniquement :
un premier type (A) de profils extrudés, ayant une paroi supérieure (3), une paroi latérale externe (4), une paroi latérale interne (5) et une paroi inférieure (6) et dans lequel la paroi supérieure (3) forme une ailette latérale (3a) faisant saillie au-delà de la paroi latérale externe (4), qui forme à son tour une ailette inférieure (4a) faisant saillie vers le bas au-delà de la paroi inférieure (6) ; une ailette latérale interne (5a) s'étendant à partir de la paroi interne (5) et/ou la paroi inférieure (6), dans un plan qui est essentiellement au-dessous de celui de la paroi supérieure (3), et
un deuxième groupe (B) de profils extrudés de section transversale essentiellement rectangulaire, dont l'une des parois (8) s'étend en formant deux ailettes longitudinales (8a, 8b) faisant saillie des côtés opposés,
le premier type (A) de profils extrudés étant utilisé pour former les montants latéraux (11) de l'ouverture de pare-brise (12), et les éléments latéraux longitudinaux (13) du toit du véhicule à moteur,
le deuxième type (B) des profils extrudés étant utilisé pour former le reste du châssis (2).
